# EUROPEAN PATENT APPLICATION

(11) **EP 1 842 434 A1**
(43) Date of publication of application: **10.10.2007**
(21) Application number: 05844855.6
(22) Date of filing: 27.12.2005
(51) Int. Cl.: A23L 1/10, C12C 1/00

(54) **METHOD OF PRODUCING PROCESSED BARLEY PRODUCT**

(30) Priority: 28.12.2004 JP 2004381576
(71) Applicant: SUNTORY LIMITED, Osaka-shi, Osaka 530-8203 (JP)
(72) Inventor: KAGEYAMA, Norihiko, Ibaraki-shi, Osaka 567-0888 (JP); KAWASAKI, Shingo, Fuchu-shi, Tokyo 183-0005 (JP); TAKAOKA, Seisuke, Fuchu-shi, Tokyo 183-0026 (JP); NAKAHARA, Koichi, Toyonaka-shi, Osaka 561-0861 (JP)
(74) Representative: Vossius & Partner
(86) International application number: PCT/JP2005/023846
(87) International publication number: WO 2006/070774

(57) **Abstract**

The present invention provides a mean of solving the problem of production of a novel processed product of barleys and wheat having scorch smell and cereal odor suppressed and being capable of imparting taste richness, body taste, crispness and dry feeling to beverage and food products by producing husks of barleys, ryes, or orts or a fraction containing the same with a fluid at 160 to 220° under conditions of a lowered oxygen concentration.

## Description

### Technical Field

The present invention relates to a process for producing processed products of husks of barleys, ryes, or orts which comprises treating husks of barleys, ryes, or orts or a fraction containing said husks with a fluid at the specifically determined temperature, and also to use of the processed products of husks of barleys, ryes, or orts as produced by the said process.

### Background Art

According as the personal taste has in recent years been diversified among consumers, it is essential in the winery and food-processing industries to develop the wines and foods being provided with a variety of characteristic features, simply because this permits their products to be differentiated from others' ones and also to be placed in more advantageous and favored positions on the market through impartment of the novel taste and flavor. Currently under way is the product development work to fit in with the consumers' tastes by selecting the particular starting material out of various ones and changing the manufacturing conditions so as to create the novel flavor components.

However, it is generally difficult to materialize the entirely novel flavor, insofar as the existing starting materials are treated by following the conventional procedures, although alterations of the treatment conditions may lead to a possibility of attaining merely similar, but not exactly the entirely novel, flavor from the conventional one. In order to materialize the entirely novel flavor, accordingly, it has been considered necessary to treat starting materials by a novel treatment procedure to thereby create novel flavor components.

In the manufacture of beer, there have been developed various alterations and modifications of the conventionally used starting materials, inclusive of malt, etc. As part of the starting materials, for example, use has already been made of the malts being called "special malt", such as melanoidin malt, caramel malt, etc., to make adjustments of the color and flavor of beer products. Such special malts are produced by setting the temperature of drying in the malt manufacturing process at slightly higher temperatures than the ordinary ones to cause caramel formation or Maillard reaction. More particularly, ordinary malt is produced by carrying out the drying step at a temperature in the neighborhood of 80°C for 2 to 6 hours to thereby allow the germination to terminate, whereas the melanoidin malt is produced by drying through heating at a temperature in the range of 100 to 130° C for 2 to 6 hours under exposure to the open-system air, and the caramel malt is made by drying through heating at a temperature in the range of 130 to 160°C for a period of time in the region of 2 to 6 hours.

The Official Gazette of WO 2004/039936 describes that a plant or its processed product is subjected to high-temperature and high-pressure treatment to yield the treated product with an increased content of a vanilla-flavoring and tasting component, such as vanillin and that such treated product can be used to produce beverage and food products with an improved flavor peculiar to vanilla. The process is extremely excellent in imparting the flavoring component to beverage and food products, but cannot necessarily be said to be satisfactory in that the problem of an imbalanced flavor, such as scorch smell and cereal odor, has been left unsolved, with the result that there exists greater room for improvement to be made in producing beverage and food products with an enhanced content of the taste-richness and stimulant component.

### Disclosure of the Invention

### [The Problem That the Invention Is Intended to Solve]

The present invention has as its objects to provide a novel processed product of husks of barleys, ryes, or orts and a composition containing the processed product of husks of barley and wheat both of which have scorch smell and cereal odor suppressed but are rich in a component capable of imparting taste richness and stimulant feeling (e.g., body-taste feeling of drinking, crispness, dry feeling, etc.), and also to provide a process which can permit said processed product of husks of barleys, ryes, or orts and composition containing the processed product of husks of barleys, ryes, or orts to be produced on an industrially advantageous scale. Also, the present invention has as its object to produce the beverage and food products, which show improved taste richness and stimulant feeling but suppressed scorch smell and cereal odor, with use of such processed product of husks of barleys, ryes, or orts and the composition containing the processed product of husks of barleys, ryes, or orts.

### [Means for Solving the Problem]

The present inventors conducted intensive investigation to solve the problem, and as a result, found that treatment of husks of barleys, ryes, or orts or a fraction containing such husks with a fluid at 160 to 220°C under a lowered oxygen concentration can permit a processed product of husks of barleys, ryes, or orts having scorch smell depressed and cereal odor suppressed to be produced on an industrially advantageous scale, and also that such processed product of husks of barleys, ryes, or orts can be used as part of the starting material for beverage and food products to yield the beverage and food products with improved taste richness and stimulant feeling.

The present inventors especially discovered that the composition, which comprises a malt or its inner fraction (the fraction other than the husk), being formulated with the processed product of malt husks as obtained by treating malt husks or a fraction containing the same with a fluid at 160 to 220° C, can not only offer the characteristic feature of imparting taste richness and stimulant feeling to beverages but also possess the intact enzymes derived from the inner fraction without being inactivated, and thus can find more suited application as a starting material for the beverages brewed using malt of barleys, ryes, wheat, or oats with taste richness and stimulant feeling.

The present inventors, after having acquired the above-described, different findings, carried out further repeated investigation, and completed the present invention. Thus, the present invention relates:
[1] A process for producing a processed product of husks of barleys, ryes, or orts, characterized in that said process comprises treating husks of barleys, ryes, or orts or a fraction containing the same with a fluid at 60 to 220° C under conditions of a lowered oxygen concentration;
[2] The production process as described above under [1], wherein the barleys and wheat are malt;
[3] The production process as described above under [1] or [2], wherein the lowered oxygen concentration is in the range of 0 to 1µg/mL of the oxygen concentration;
[4] The production process as described above under any one of [1] to [3], wherein the fluid is derived from a deaerated liquid;
[5] The production process as described above under any one of [1] to [4], wherein the fluid is saturated steam;
[6] A beverage and food product as produced using as a starting material the processed products of husks of barleys, ryes, or orts as described above under any one of [1] to [5];
[7] A process for producing a composition containing a processed product of malt husks, characterized in that said process comprises formulating a malt with the processed product of malt husks as obtained by treating malt husks or a fraction containing the same with a fluid at 160 to 220° C under conditions of a lowered oxygen concentration;
[8] A beverage and food product which is produced by using as a starting material a composition containing a processed product of malt husks as produced by the process described above under [7];
[9] The beverage and food product as described above under [8], wherein the beverage and food product is a brewed beverage of cereals; and
[10] The beverage and food product as described above under [8],
wherein the brewed wine is a beverage brewed using malt of barleys, ryes, wheat, or oats.

### [Effect of the Invention]

The present invention can produce the effect that the processed product of husks of barleys, ryes, or orts and the composition containing the processed product of husks of barleys, ryes, or orts, which can suppress scorch smell and cereal odor and also impart taste richness, body taste, crispness and dry feeling to a beverage and food product, can be produced on an industrially advantageous scale.

### [Production of a processed product of husks of barleys, ryes, or orts]

The process for producing a processed product of husks of barleys, ryes, or orts according to the present invention is characterized by treating husks of barleys, ryes, or orts or a fraction containing said husks with a fluid at 160 to 220°C under conditions of a lowered oxygen concentration.

### [Husks of barleys, ryes, or orts and a fraction containing said husks]

The barleys and wheat may be exemplified by barleys and wheat, such as malt, barleys, wheat, rye, oats, adlay, etc., and are not understood to be limited thereto. In the present invention, malt can suitably be utilized as barleys and wheat. Such malt preferably is malt of barley, and such malt can be produced by the ordinary methods, such as the method which comprises the steps of soaking barley in water to allow germination, followed by drying, and removing malt roots.

Referring to the husks of barleys , ryes, or orts, used as a starting material in the present invention are husks of barleys, ryes, or orts or a fraction containing said husks, since they are particularly distinguished for imparting taste richness and stimulant feeling through treatment with a high-temperature and high-pressure fluid.

In fractionating barleys and wheat into husks and the inner fraction (or a portion obtained by removing husks from cereals), the fractionation method is not particularly limited. For example, the hulling machine may be employed to separate hulls, while cereal powder produced by dry pulverization is fractionated through sieve-screening, and the fractionated fraction may be used as a fraction containing husks of barleys , ryes, or orts.

The above-described husks of barleys, ryes, or orts or fraction containing said husks can also be subjected to an additional pulverization step prior to treatment with a fluid. This enables uniform treatment to be effected, whereby the starting material can be uniformly pulverized to uniformly produce the processed product of husks of barleys, ryes, or orts according to the present invention and also the processed product of husks of barleys, ryes, or orts according to the present invention can be molded easily. Furthermore, the mixing step can also be incorporated in addition to the pulverization step. By means of this, the starting material as pulverized in the pulverization step can be mixed uniformly. It is added that these steps are carried out in accordance with the ordinary procedures.

The process for producing the processed product of husks of barleys, ryes, or orts according to the present invention comprises treating the above-described husks or a fraction containing said husks with a fluid at 160 to 220° C under conditions of a lowered oxygen concentration (hereinafter referred to briefly as "treatment with a fluid").

### [Fluid]

The fluid which is usable in the present invention includes, for example, liquids, gases, supercritical fluids, subcritical fluids, etc.

The liquids may be exemplified by distilled water, desalted water, electrolyzed alkaline water, deep ocean water, ion exchanged water, deoxygenated water or water-soluble organic compounds (e.g., alcohols, etc.) and water containing inorganic salts, and the like, but are not limited thereto.

The gases include, for example, vapors of the above-described liquids. As the steam which is used in the treatment of husks of barleys, ryes, or orts or fractions containing said husks, saturated steam is preferable from the standpoints of improved processability, operability, etc. , but the steam is not limited thereto.

Also, the fluids include the above-described liquids and gases, as well as supercritical fluids or subcritical fluids, etc. There exists the state in which the heating above the particularly specified pressure and temperature (critical point) results in disappearance of the boundary surface between gas and liquid to maintain the fluid state where both of the gas and liquid exist in complete harmony. Such fluid is referred to as a supercritical fluid, which constitutes the fluid with an increased specific gravity possessing the properties intermediate between gas and liquid. The subcritical fluidrefers to a fluid whose pressure and temperature are below the critical point.

### [Treatment temperature]

The temperature of the fluid during the treatment with a fluid is not particularly limited, only if it is in the range of about 160 to 220° C. In the present invention, the temperature, among they above-described temperature range, is preferably in the range of 160 to 190° C, more preferably in the range of 170 to 290° C, most preferably in the range of 180 ± 5° C. When the treatment temperature is less than 160°C, there results a decrease in the enhanced effect of the component being attributable to the impartment of taste richness and stimulant feeling, whereas the treatment temperature of higher than 220° C brings about intensified scorch smell, and makes in some instances the processed product unsuited as a starting material for a beverage brewed using malt of barleys, ryes, wheat, or oats, depending upon the design of intended flavor. It is to be noted that the treatment temperature of not higher than 190° C enables the vanilla flavor and caramel flavor to be suppressed.

### [Treatment pressure]

In the present invention, also, the treatment with a fluid is preferably carried out under applied pressure. The pressure of a fluid during the treatment is preferably ca. 0.1 to 2. 2MPa, and is preferably the saturated-vapor pressure. As used herein, the term "pressure" refers to "gauge pressure". Consequently, "0.1MPa of pressure" is converted to the atmospheric pressure by adding 0.1MPa to pressures on an absolute pressure basis. Such range of pressure (ca. 0.1 to 2.2MPa) can permit taste richness and stimulant feeling to be imparted to the processed product, while keeping scorch smell suppressed. The above-described pressure is more preferably ca. 0.2 to 1.4MPa.

### [Treatment time]

The treatment time during the treatment with a fluid is preferably ca. 1 sec. to 60 min., more preferably ca. 3 sec. to 120 min. In cases where the treatment temperature is set at 180°C, for example, the treatment time is preferably 30 to 120 sec., more preferably 30 to 90 sec. The preferred range of the time (ca. 30 to 120 sec.) additionally enables the energy requirement to be reduced and can produce the effect of increasing the rate of operation of production facilities.

### [Lowered oxygen concentration]

The oxygen concentration during the treatment with a fluid is to be maintained at lowered oxygen concentrations. In the present invention, any known means can be employed to provide such lowered oxygen concentrations. For example, the deaerated (air-removed) liquid can be used as a fluid for the treatment with a fluid to thereby provide the above-described lowered oxygen concentrations, while, on the other hand, use can be made of a liquid admixed in advance with a substance capable of removing oxygen in place of such deaerated liquid.

Additionally, the treatment atmosphere can be replaced with a gas having an oxygen concentration of ca. 0 to 1µg/mL prior to the above-described treatment to thereby provide the above-mentioned lowered oxygen concentrations, wherein the gas having an oxygen concentration of ca. 0 to 1µg/mL is not particularly limited and is preferably inert gases, such as nitrogen, etc., carbon dioxide or deoxygenated gases. The deoxygenated gas may be exemplified by a gas obtained by boiling an deaerated gas, and the like. The oxygen concentration during treatment can be measured by the known procedure, for example, by use of an ordinary dissolved-oxygen meter (DO meter).

In the present invention, the above-described treatment may additionally be supplemented with the known treatment. The said known treatment may be exemplified by fine pulverization, extraction (inclusive of supercritical extraction), drying (e.g., vacuum drying, etc.) and the like, but is not limited thereto.

To be given below is the description on the cases where the treatment with a fluid is supplemented with the drying step. When the processed product is left on standing after the treatment with a fluid, starch gets pasty and then solidified upon cooling, thus requiring additional labor or manpower in the subsequent pulverization step. In order to produce the processed product in an form easier to handle, it is desirable to add the drying step which facilitates pulverization to be conducted. One procedure for the purpose of this involves the treatment with a fluid, followed by vaporization of the moisture for a shortened period of time through abrupt reduction of pressure to thereby allow rapid drying. This procedure, through abrupt reduction of the pressure, provides the processed product with a sponge-like tissue and can eliminate the problem of solidification as encountered in the ordinary drying procedure. Such drying step facilitates the subsequent dissolution and pulverization to be carried out, and can be added positively to thereby produce the processed product of barleys and wheat in the form more easy to utilize in the subsequent steps than the spontaneous drying step.

During the above-described drying step, a liquid-state processed product can be formed and molded into any arbitrary forms and shapes by an extrusion or drawing means or furthermore a combination thereof with a cutting means, if desired. The form and shape may be exemplified by stick-like, circular-cylindrical, polygonal-cylindrical and polygonal forms and shapes , etc. , and such forming and molding enables the form and shape to be varied, if desired. On the occasion of this, it is possible to regulate the moisture content of the processed product of barleys and wheat.

### [Treatment equipment]

The equipment which is employed for the treatment with a fluid according to the present invention is not particularly limited and may be employable, only if it is of the construction to withstand increased temperatures as high as 160 to 220°C. Examples of the above-described equipment include the equipment comprising a combination of a pressure-resistant reaction vessel with a heating device, and in such equipment, a liquid or gas is heated with the heating device and converted into the high-temperature and high-pressure liquid or gas, which is then fed to the reaction vessel. Referring to the heating device, any heating devices can be employed, only if they are capable of heating. Such heating may be exemplified by heating by electricity, petroleum, coal or gas, heating with solar energy, geothermal heating, etc., but is not limited thereto. In addition, the above-described equipment may be a sort of mere heat-resistant, pressure-resistant pipes. Materials of construction for such reaction vessels or pipes maybe of pressure and heat resistance, but are preferably free from elution of metal components, generation of toxic substances and evolution of disagreeable odors. The above-described materials of construction may preferably be materials of construction, such as stainless steel, in order to prevent useless, adverse reactions, corrosion, degradation, etc., but are not limited thereto.

It is to be added that when the above-described equipment is employed, the inside of the vessel in the equipment is preferably replaced with a gas having an oxygen concentration of 0 to 1µg/mL prior to the treatment with a fluid.

The preferred equipment which can conduct the present invention into practice includes, for example, use of extruders, which facilitates extremely the processing operations subsequent to the above-described treatment to be carried out. Also, the use of an extruder, which permits the continuous processing to be effected, is suitable for delivering large quantities of the processed product. Extruders are often employed for the production of expanded food products and may be exemplified by an extruder which, with its twin or multi screws or single screw being arranged within its extruding barrel, functions to heat and pressurize the starting material while mixing and to extrude the same in the high-temperature and high-pressure state through an extruding die. Preferred in the present invention is the two shaft extruder which can assure the stable processing. Use of such extruder not only enables the continuous processing to be carried out but also permits the moisture to be vaporized through abrupt release of increased pressure down to lowered pressure after processing, thereby yielding the processed product as molded into the desired form and shape through the appropriately selected shape of the extruding die. On the occasion of this, there can be offered the advantage that the processed product, presenting the expanded form, is easy to dissolve in liquids, such as water. Any types of equipment other than those may be employable, only if they can provide and realize the above-described conditions.

### [Manufacture of the compositions containing the processed product of husks of barleys, ryes, or orts]

According to the present invention, the processed product of husks of barleys, ryes, or orts as obtained in the above-described manner can be formulated into cereals in accordance with ordinary procedures to produce the composition containing the processed product of husks of barleys, ryes, or orts. The preferred embodiment includes, for example, manufacture of a composition containing the processed product of malt husks which involves incorporating malt with the processed product of malt husks as obtained by treating malt husks or a fraction containing said husks with a fluid at 160 to 220°C.

Another preferred embodiment includes, for example, manufacture of a composition containing the processed product of malt husks which invovles incorporating the inner fraction of malt or malt with the processed product of malt husks as obtained by treating malt husks or a fraction containing said husks with a fluid at 160 to 220° C. The composition containing the processed product of malt husks as manufactured by the above-described procedure, which contains a fraction not subjected to the treatment with a fluid, can keep the enzymes necessary for sacchrification contained alive and intact in the said composition without being inactivated.

The ratio of formulating the processed product of malt husks in the composition containing the processed product of mal t husks varies with the type of beverage and food products, species of cereals, etc. and is not particularly limited. In manufacturing the composition containing the processed product of malt husks as a starting material for a beverage brewed using mal t of barleys, ryes, wheat, or oats, for example, the formulation ratio of the processed product of malt husks against malt ranges preferably from 0.01 to 0. 5% by weight, more preferably from 0.03 to 0.1% by weight. The composition, only if its formulation ratio is within such preferable range, can be used as a starting material for beer or *Happoshu* having various formulation ratios of malt to give the beverages which excel outstandingly in fragrance, crispness and stimulant feeling.

### [Production of beverage and food products]

According to the present invention, the above-described processed product of husks of barleys, ryes, or orts and/or the above-described composition containing the processed product of husks of barleys, ryes, or orts can be used partly or wholly as a starting material to thereby produce the beverage and food products in accordance with the ordinary process. The preferred beverage and food product includes, for example, cereal-brewed wines.

The above-described cereal-brewed wine refers to brewed wines produced by using the above-described processed product of husks of barleys, ryes, or orts partly or wholly as a starting material,

Although it is possible to apply the technology of the present invention to distilled wines or liquors, such as whisky, in light of the fact that such cereals as malt are used partly as a starting material, the technology is less effective in imparting the crispness and stimulant feeling, after distilled wines or liquors undergo the distillation step. Accordingly , the beverage to which the present invention is applicable may suitably be exemplified by cereal-brewed wines which do not undergo the distillation step, and as a more particular example, there may be mentioned malt-brewed beverages and Japanese rice wine.

The malt-brewed beverage refers to malt brewed beverages produced by using the processed product of malt husks partly or wholly as a starting material, and such malt-brewed beverages include, for example, beer, sparklingwines, miscellaneous wines, liqueurs, malt-brewedbeverages with a lowered content of alcohol (e.g., beverages with an alcohol content of less than 1%) and the like.

In producing the beverages of the present invention, it is possible to use in combination starting materials, inclusive of saccharides and barley, other than malt to thereby regulate the ingredients. Also, a variety of enzymes, such as saccharifying enzyme, may be added separately, as the case may be. Alternatively, they can also be combined with saccharified starting materials, such as saccharified starch. Furthermore, the starting material as produced through regulation of the composition can be subjected to additional fine regulation of the components by selecting various conditions of pulverization, saccharification, filtration of the malt solution, boiling and fermentation.

The proportion, in which the composition containing the processed product of malt husks is used in the beverage brewed using malt of barleys, ryes, wheat, or oats exclusive of water and hop, is not particularly limited but is preferably 10 to 100% by weight.

### [Examples]

To be described below are the examples, but the present invention is not restricted by these examples.

### Example 1 and Comparative Examples 1 and 2: Evaluation of malt, inner fraction of malt and processed product of malt husks

Investigation was conducted into effects of temperature conditions and treatment time on the malt processed product and the processed product of malt husks. As the malt of Comparative Example 1a, Europe-made *Nijo* barley malt was used, while as the malt husks of Comparative Example 1a, there were utilized the husks obtained by milling Europe-made *Nijo* barley malt with a milling machine, followed by fractionation of the surface layer with a sieve (0.7mm). As the inner fraction of malt of Comparative Example 2a, use was made of the fraction other than the malt husks.

Processing was carried out with use of a high-temperature, humid-heat treatment testing machine (manufactured by Hisaka SeisakushoCo. of Japan: Model HTS-25/140-8039), ahigh-pressure steam boiler (manufactured by Miura Industrial Co. of Japan: Model FH-100). Charged into a 12L-basket made of SUS316 alloyed steel was 2 kg of Europe-made *Nijo* barley malt (Comparative Example 1a), malt husks (Example 1a) or the inner fraction of malt (Comprative Example 2a), and the basket was placed in a heat-resistant and pressure-resistant vessel made of SUS316 alloyed steel, followed by hermetic closure. High-temperature, high-pressure saturated steam (2.7MPa, 230°C), which was generated from water (with an oxygen concentration of 0.3µg/ml) deoxygenated by a deoxygenation equipment (manufactured by Miura Industrial CO. of Japan: Model DOR-1000P), was fed into the vessel for a length of time of ca. 1 sec. to provide the conditions of a lowered oxygen concentration through replacement of the air within the vessels Then, the high-temperature and high-pressure state was maintained at the temperature conditions (the pressure being equivalent to the one of the saturated steam) ranging from 160°C/0.5MPa to 240°C/3.2MPa for 60 sec. Additionally, 2kg of Europe-made *Nijo* barley malt (Comparative Example 1b), malt husks (Example 1b) or the inner fraction of malt (Comparative Example 2b) was subjected to the same high-temperature and high-pressure treatment as described above under the conditions of 180°C/0.9MPa for the treatment time ranging from 30 to 240 sec. In each of these cases, the reaction vessel was deaerated and kept vacuumed for 30 min. to conduct vacuum-drying, thereby yielding the processed product of malt, processed product of the inner fraction of malt or processed product of malt husks. Each of the processed products was allowed to undergo sensory evaluation, with the results being presented in Tables 1 and 2.

### [Method of evaluation]

### Sensory evaluation

Sensory evaluation of each test specimen was conducted by thirty panelists for the items of evaluation, i.e. scorch smell, vanilla fragrance, caramel fragrance and cereal odor, on the basis of two grades, "not perceptible" and "perceptible". and expressed by the number of the panelists who made the evaluation as "perceptible".

**Table 1:**

| | | Untreated | 160° C | 180° C | 190° C | 200° C | 220° C | 240° C |
|---|---|---|---|---|---|---|---|---|
| Processed product of malt (Comp. Example 1a) | Scorch Smell | 0 | 3 | 5 | 7 | 16 | 30 | 30 |
| | Vanilla fragrance | 0 | 1 | 4 | 5 | 9 | 30 | 24 |
| | caramel Fragance | 0 | 4 | 10 | 10 | 22 | 30 | 19 |
| | Cereal Odor | 25 | 6 | 4 | 1 | 0 | 0 | 0 |
| Processed product of inner fraction of malt (Comp. Example 2a) | Scorch smell | 0 | 0 | 9 | 11 | 30 | 30 | 30 |
| | Vanilla fragrance | 0 | 0 | 1 | 1 | 3 | 7 | 7 |
| | Caramel fragrance | 0 | 5 | 8 | 9 | 20 | 25 | 30 |
| | Cereal Odor | 12 | 3 | | 0 | 0 | 0 | 0 |
| Processed product of malt husks (Example 1a) | Scorch Smell | 0 | 1 | 3 | 5 | 11 | 13 | 27 |
| | Vanilla fragrance | 0 | 3 | 6 | 8 | 25 | 30 | 29 |
| | Caramel fragrance | 0 | 2 | 4 | 4 | 13 | 26 | 22 |
| | Cereal Odor | 19 | 10 | 5 | 2 | 0 | 0 | 0 |

**Table 2:**

| | | Untreated | 30 sec | 60 sec | 90 sec | 120 sec | 240 sec |
|---|---|---|---|---|---|---|---|
| Processed product of malt (Comp. Example 1b) | Scorch smell | 0 | 3 | 5 | 16 | 22 | 22 |
| | Vanilla fragrance | 0 | 2 | 4 | 8 | 11 | 16 |
| | Caramel fragrance | 0 | 3 | 10 | 9 | 13 | 18 |
| | Cereal odor | 25 | 6 | 4 | 0 | 0 | 0 |
| Processed product of inner fraction of malt (Comp. Example 2b) | Scorch smell | 0 | 2 | 9 | 15 | 23 | 28 |
| | Vanilla fragrance | 0 | 0 | 1 | 1 | 3 | 2 |
| | Caramel fragrance | 0 | 4 | 8 | 9 | 11 | 11 |
| | Cereal odor | 12 | 4 | 0 | 0 | 0 | 0 |
| Processed product of malt husks (Example 1b) | Scorch smell | 0 | 4 | 3 | 13 | 16 | 21 |
| | Vanilla fragrance | 0 | 4 | 6 | 10 | 13 | 13 |
| | Caramel fragrance | 0 | 3 | 4 | 6 | 10 | 9 |
| | Cereal odor | 19 | 9 | 5 | 0 | 0 | 0 |

Results of the sensory evaluation reveal that the processed product of malt husks of Example 1a, as treated at a temperature of not less than 240° C, emitted a stronger scorch smell, but, as treated at a temperature of 160 to 220° C, produced a suppressed scorch smell, while it gave off a moderate vanilla fragrance, and the product, as the whole, attained and realized suppression of the scorch smell, exquisitely balanced composition of the fragrance constituents and furthermore repression of the cereal odor; the processed products of Comparative Examples 1a and 2a, when processed at a temperature of not less than 160°C, gave off extremely stronger caramel fragrance and scorch smell; and any processed products of Examples and Comparative Examples, after being treated at a temperature less than 160° C, came to emit cereal odor.

It is furthermore added that in the case of the treatment temperature at 180° C, the processed product of Example 1b emitted lessened scorch smell and cereal odor even when processed for 120 sec and produced excellent results, whereas the processed products of Comparative Examples 1b and 2b emitted stronger scorch smell, when processed for not less than 120 sec.

### Example 2: Production and evaluation of the composition containing the processed product of malt husks:

The processed product of malt husks as obtained in Example 1 (the processed product treated at 180°C for 60 sec.) was formulated into malt in the different proportions as indicated in Table 3 to produce the compositions containing the processed product of malt husks.

The resulting compositions A to E containing the processed product of malt husks were subjected to measurement of the vanillin content and furthermore the sensory test for the items of evaluation, i.e. scorch smell, caramel fragrance, vanilla fragrance and cereal odor, by the below-described procedures, respectively.

### [Sensory Testing]

Sensory testing was carried out by 30 panelists on the scale of the two grades, "not perceptible" and "perceptible", and the results were expressed by the number of the panelists who made the evaluation as "perceptible".

### [Measurement of the vanillin content]

The vanillin content was measured by the following the below-described procedure: 1 g of a test specimen was admixed with 100ml of water, followed by respective extractions with warm water at 65° C for 15 min. and at 75° C for 15 min., and the extracts were subjected to measurement of the vanillin content, which procedure comprised admixing 20 g of the water extract with the equal quantity of ethyl acetate, followed by shaking for 10 min., and recovering by separation the ethyl acetate layer; concentrating to dryness over a rotary evaporator the ethyl acetate layer obtained by repeating the procedure three times, dissolving the resultant concentrate in 1 ml of methanol, and subjecting 10µl of the ethanol solution to HPLC to measure the absorbance at a wavelength of 280nm, whereby measurement of the absorbance was effected with High-Pressure Liquid Chromatography System CLASS-VP Series (manufactured by Shimadzu Corp.) and Deverosil-C30 Column (produced by Nomura Chemical Co., measuring 4.6 by 150 mm), using the water-acetonitrile solvent, under the analytical conditions of 0.05% aqueous TFA (which stands for triluforoacetic acid) and 0.05% aqueous TFA solution + 90% aqueous acetonitrile solution being used as A and B Solutions, respectively, to conduct linear gradient elution over the 100-min period of time from 0 to 20% of B solution at a flow rate of 1ml/min. On the basis of the measured absorbances, the amount of vanillin (pg) per 10 g of the test specimen was calculated with the commercially available vanillin used as a standard substance.

**Table 3:**

| Composition containing the processed product of malt husks | Formulation ratio of the processed product of malt husks, wt.% | Amount of vanillin µg/10 g | Evaluation of fragrance | | | |
|---|---|---|---|---|---|---|
| | | | scorch smell | Vanilla fragrance | Caramel fragrance | Cereal odor |
| Control (malt alone) | - | 8.34 | 0 | 0 | 0 | 21 |
| A | 0.01 | 8.34 | 0 | 0 | 0 | 18 |
| B | 0.05 | 8.68 | 0 | 0 | 0 | 12 |
| C | 0.10 | 10.46 | 0 | 4 | 6 | 12 |
| D | 0.50 | 21.95 | 8 | 12 | 10 | 4 |
| E | 1.00 | 38.11 | 9 | 21 | 18 | 5 |

It is evident from the results of Table 3 that the compositions A to D containing the processed product of malt husks did not emit the vanilla fragrance being featured by vanillin , and failed to give off the cereal odor peculiar to malt , as perceived by a reduced number of the panelists, and that the composition containing the processed product of malt husks, when formulated with 0.01 to 0.5% of the processed product of husks, was suited for suppressing the vanilla fragrance. It is also shown that the compositions A to E containing the processed product of malt husks were provided with well balanced combination of flavor constituents and give off suppressed cereal odor and scorch smells.

### Example 3: Evaluation of Happoshu manufactured with the compositions containing the processed product of malt husks:

Different types of *Happoshu* were manufactured in accordance with the ordinary process, while using the compositions containing the processed product of malt husks: thus, six types of *Happoshu* were manufactured individually with use of the compositions A to E containing the processed product of malt husks as obtained in Example 2 and the control (malt alone) at the ratio of 24% against the whole starting materials used (hereinafter referred to merely as "starting material used") exclusive of water. Specifically, added to 150L of water at 65° C were 30 kg each of the compositions A to E containing the processed product of malt husks and the control (malt alone), followed by saccharification for ca. 1 hour. After filtration of the saccharified solutions, the saccharified starches were added individually to malt to the final malt proportion of 24%, followed by stirring, and ca. 100 kg of hop was charged individually, followed by boiling and cooling. Ca. 300 g of yeast for beer brewing was added to each of the resultant mixtures, followed by fermentation at 12° C for 2 weeks to give six types of *Happoshu.*

These types of *Happoshu* were subjected to sensory evaluation to assess or evaluate four items of evaluation, the taste richness, body taste, crispness and dry feeling; the sensory evaluation was conducted by 20 trained panelists, whereby assessment was made on the numerical scale of four grades of 0 (not perceptible) to 3 (strongly perceptible), and the average values were calculated to assess each of the items of assessment, with the results being shown in Table 4.

**Table 4:**

| | Malt starting material | Sensory Evaluation | | | |
|---|---|---|---|---|---|
| | | Taste Richness | Body taste | Crispness | Dry Feeling |
| Control *Happoshu* | Control (malt alone) | 1.4 | 1.2 | 1.4 | 1.5 |
| *Happoshu* A | The Composition A | 1.5 | 1.2 | 1.4 | 1.5 |
| *Happoshu* B | The Composition B | 2.2 | 2.1 | 2.2 | 2.3 |
| *Happoshu* C | The Composition C | 2.2 | 2.2 | 2 | 2 |
| *Happoshu* D | The Composition D | 2.8 | 2.6 | 1.6 | 1.8 |
| *Happoshu* E | The Composition E | 2.8 | 2.6 | 1.1 | 1.6 |

The results demonstrate that the compositions containing the processed product of malt husks with a decreased content of the processed product of malt husks yielded *Happoshu* having deteriorated assessment of each item of evaluation, whereas the compositions containing the processed product of malt husks with an increased content of the processed product of malt husks produced *Happoshu* with enhanced taste richness and body taste, but reduced crispness and dry feeling being attributed to deteriorated aftertaste. Consequently, the compositions B and C containing the processed product of malt husks were found to be best suited for the manufacture of *Happoshu*

### Example 4: Manufacture of a beverage brewed using malt of barleys, ryes, wheat, or oats

A beverage brewed using malt of barleys, ryes, wheat, or oats was manufactured using as a starting material the composition containing the processed product of malt husks according to the present invention; 30kg of the composition B containing the processed product of malt husks as weighed was admixed with 150L of water at 65° C, followed by saccharification for ca. 1 hour. About 100 g of hop was charged to the barley solution obtained by filtering the saccharified solution, and the mixture solution was boiled for ca. 1 hour, then cooled at 12° C and admixed with ca. 300 g of yeast for beer brewing, followed by fermentation at 12°C for 2 weeks to give a beverage brewed using malt of barleys, ryes, wheat, or oats.

The resultant beverage brewed using malt of barleys, ryes, wheat, or oats was subjected to sensory evaluation to assess four items of evaluation, the taste richness, body taste, crispness and dry feeling; the sensory evaluation was conducted by 20 trained panelists, whereby assessment was made on the numerical scale of four grades of 0 (not perceptible) to 3 (strongly perceptible), and the average values were calculated to assess each of the items of evaluation, with the results being shown in Table 5.

**Table 5:**

| Sensory evaluation | | | |
|---|---|---|---|
| Taste richness | Body taste | Crispness | Dry feeling |
| 2.8 | 2.6 | 2.3 | 2.3 |

### Example 5: Manufacture of beer

The beer was manufactured, using the composition containing the processed product of malt husks according the present invention. By following the same procedure as described in Example 1 except that the treatment was carried out at 210°C for 60 sec., there was obtained a composition containing the processed product of malt husks, which composition (treated at was used at 210° C for 60 sec.) was used as a starting material for beer. 10 g of the composition was weighed and admixed with 150L of water at 65° C, together with 30kg of Europe-made *Nijo* barley malt, followed by saccharification for about 1 hour. About 100 g of hop was charged into the barley solution obtained by filtering the saccharified solution, and the mixture solution was boiled at 100° C for 1 hour, then cooled at 12° C, and admixed with ca. 300g of a yeast for beer brewing, followed by fermentation at 12° to give beer.

Sensory evaluation was conducted with the beer to evaluate the items of evaluation, such as taste richness, body taste, crispness and dry feeling. The sensory evaluation was carried out by 20 trained panelists on the numerical scale of the four grades of 0 (not perceptible) to 3 (strongly perceptible) through the assessment of each item made on the basis of the average value calculated. The results are shown in Table 6, whereby as a control, malt alone was utilized without using the processed product of malt husks to give beer, which was made "control beer".

**Table 6:**

| | Sensory evaluation | | | |
|---|---|---|---|---|
| | Taste richness | Body taste | Crispness | Dry feeling |
| Control beer | 2.1 | 2.0 | 1.7 | 1.9 |
| Beer of Example 5 | 2.7 | 2.4 | 1.8 | 2.2 |

Table 6 demonstrates that Beer of Example 5 possessed better taste richness, body taste, crispness and dry feeling than conventionally brewed beer. It is added that the processed product of malt husks was freed both of scorch smell and cereal odor and showed satisfactory fragrance composition.

### Example 6: Manufacture of Happoshu

*Happoshu* was manufactured using as a starting material the composition containing the processed product of malt husks according to the present invention, wherein as a malt starting material for *Happoshu,* use was made of the processed product of malt husks (treated at 210°C for 60 sec) as produced by the same procedure as described in Example 5. Specifically, 30 g of the processed product of malt husks (treated at 210°C for 60 sec) as produced by the same procedure as described in Example 1 weighed and admixed with 150L of water at 65° C, together with 30 kg of *Rokujo* barley malt made in North America, followed by saccharification for ca. 1 hour. The barley solution produced by filtration of the saccharified solution was admixed with saccharified starch to the final malt proportion of 24%, and then with water, and ca. 100 g of hop was added, followed by boiling at 100° C for ca. 1 hour. The fermentation solution was cooled to 12° C and then admixed with ca. 300 g of yeast for brewing, and fermentation was allowed to proceed at 12° C for 2 weeks to give *Happoshu.*

Sensroy evalution was conducted with the *Happoshu* to evaluate the items of evaluation, such as taste richness, body taste, crispness and dry feeling. The sensory evaluation was carried out by 20 trained panelists on the numerical scale of the four grades, 0 (not perceptible) to 3 (strongly perceptible), through the assessment of each item made on the basis of the mean value calculated. The results are shown in Table 6, whereby as a control, malt alone was utilized without using the processed product of malt husks to give *Happoshu,* which was made "control *Happoshu*".

**Table 7:**

| | Sensory evaluation | | | |
|---|---|---|---|---|
| | Taste richness | Body taste | Crispness | Dry feeling |
| Control beer | 1.6 | 1.7 | 2.1 | 2.2 |
| Beer of Example 6 | 2.2 | 2.1 | 2.5 | 2.6 |

Table 7 demonstrates that Beer of Example 5 possessed better taste richness, body taste, crispness and dry feeling than conventionally brewed beer.

### Industrial Applicability

The present invention can provide the processed product of malt husks and the composition containing the proecessed product of malt husks which have scorch smell and cereal odor suppressed and are capable of imparting taste richness, body taste, crispness and dry feeling to beverage and food products.

## Claims

1. A process for producing a processed product of husks of barleys, ryes, or orts, **characterized in that** said process comprises treating husks of barleys, ryes, or orts or a fraction containing the same with a fluid at 160 to 220° C under conditions of a lowered oxygen concentration.

2. The production process according to Claim 1, wherein the barleys and wheat are malt.

3. The production process according to Claim 1 or 2, wherein the lowered oxygen concentration is in the range of 0 to 1µg/mL of the oxygen concentration.

4. The production process according to any one of Claims 1 to 3, wherein the fluid is derived from a deaerated liquid.

5. The production process according to any one of Claims 1 to 4, wherein the fluid is saturated steam.

6. A beverage and food product which is produced by using as a starting material the processed products of husks of barleys, ryes, or orts according to any one of Claims 1 to 5.

7. A process for producing a composition containing a processed product of malt husks, **characterized in that** said process comprises formulating a malt with the processed product of malt husks as obtained by treating malt husks or a fraction containing the same with a fluid at 160 to 220°C under conditions of a lowered oxygen concentration.

8. A beverage and food product which is produced by using as a starting material a composition containing a processed product of malt husks as produced by the process according to Claim 7.

9. The beverage and food product according to Claim 8, wherein the beverage and food product is a brewed beverage of cereals.

10. The beverage and food product according to Claim 8, wherein the brewed beverage of cereals is a beverage brewed using malt of barleys, ryes, wheat, or oats.
